# EUROPEAN PATENT APPLICATION

(11) **EP 2 508 751 A1**
(43) Date of publication of application: **10.10.2012**
(21) Application number: 11461511.5
(22) Date of filing: 08.04.2011
(51) Int. Cl.: F03D 3/04, F03D 3/06

(54) **Wind turbine with a cylindrical rotor**

(71) Applicant: Piskorz, Waldemar, 21-509 Koden (PL)
(72) Inventor: Piskorz, Waldemar, 21-509 Koden (PL)
(74) Representative: Belz, Anna

(57) **Abstract**

Turbine having a cylindrical rotor pivotally mounted on an axle, characterized in that a cylinder (2) has on its cylindrical surface longitudinal inlet openings (5) encased by supplemental blades (6) having arc-shaped lateral cross-section, while around said rotor (1) there is a housing (11) formed by two discs (12) and (13), with vertical rectangular blades (14) mounted at the edges of said disks, said blades set askew with respect to the radius passing through the centre of a blade (14).

## Description

The present invention relates to a wind-powered turbine for the compression of air.

Known in the art are air turbines that convert wind energy into power. For example, a wind turbine described in Polish patent application no. 299286 has a vertical axis rotor, positioned inside a cylindrical housing, said housing having vertical panels connected at their tops and bottoms and inclined toward the rotor.

The essence of the present invention consists in that it comprises a turbine rotor in the form of a cylinder which has on its cylindrical surface longitudinal openings running along generatrices and encased within arc-shaped supplemental blades, said rotor guarded by a cylindrical stationary housing. The housing is formed by two discs, between which there are vertically mounted rectangular blades, each set askew with respect to the radius passing through its centre. The internal vertical edges of the blades are positioned on a circumference whose diameter is a little greater than the diameter of a circle circumscribed around the tops of the supplemental blades.

Inside the rotor drum there are guides fixed to the edges of cylinder inlet openings along the connecting line of the supplemental blades to the cylinder surface. The guides are arc-bent with the convex side toward the outside while at the same time inclined toward cylinder bottom where outlet openings are located through which compressed air is discharged. The turbine is characterized by high efficiency, because incoming air directed by the guides is pumped into the supplemental blades for longer periods of time, and after each supplemental blade moves leeward of the housing, the blades allow the air to discharge from the inside of the rotor.

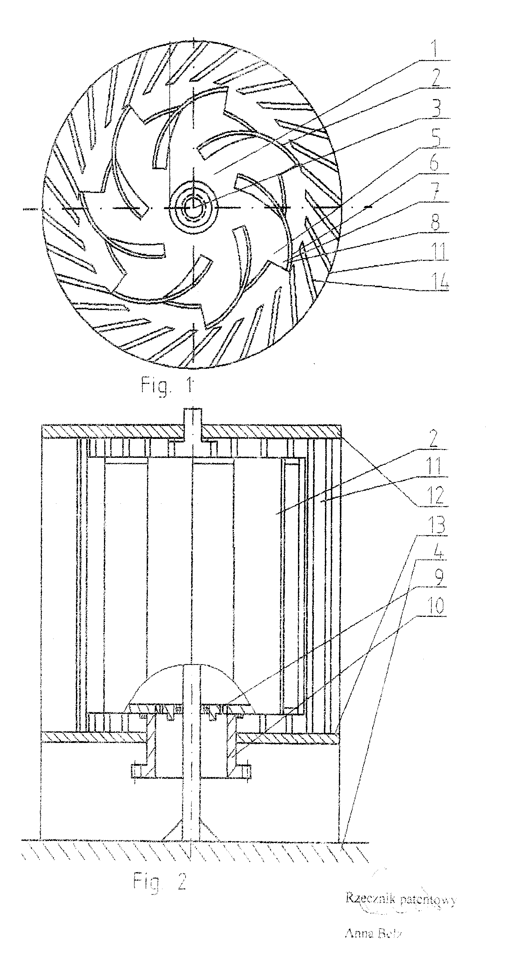

The turbine according to the present invention is shown in the drawing, where Fig. 1 shows the turbine's lateral cross-section, and Figure 2 shows the general view of the turbine and a cross-section of the rotor housing.

A rotor 1, in the form of a cylinder 2 with bottoms, is rotatably mounted on an axle 3 fixed to a base 4. On the cylindrical surface of the cylinder 2 there are longitudinal inlet openings 5, above which there are arc-shaped supplemental blades 6, guarded on their sides by baffles 7. Behind the edges of the connection of each addition 6 to the cylindrical surface of the cylinder 2, guides 8 are fixed to the internal surface of the cylinder 2, said guides bending toward the axis 3 and, at the same time, inclined toward the base 4. In the bottom at the base 4 there are outlet openings 9 encased by a pipe 10 located concentrically in the central part of the cylinder 2. The rotor 1 is housed in a cylindrical housing 11 attached to the base 4, said housing composed of discs 12 and 13 between which there are vertical blades 14 set askew at the same angle with respect to the radius passing through the centre of a blade 14, said blades forming nozzles which direct the air into the discharge openings 9, through which air from the inside of the cylinder 2 is discharged. The internal vertical edges of the blades 14 are located on a circumference whose diameter is slightly greater than the diameter of a circle circumscribed around the tops of the supplemental blades 6.

## Claims

1. A turbine having a cylindrical rotor rotatably mounted on an axis, **characterized in that** said rotor (1) comprises a cylinder (2) having on its cylindrical surface longitudinal inlet openings (5) encased by supplemental blades (6) having arc-shaped lateral cross-section, while around said rotor (1) there is a housing (11) formed by two discs (12 and 13) with vertical rectangular blades (14) fixed at the edges of said disks, each said blade (14) positioned askew with respect to a radius passing through the centre of the blade (14), and the internal vertical edges of said blades (14) are located on a circle having a diameter slightly greater than the diameter of a circle circumscribed around the tops of said supplemental blades (6).

2. The turbine according to claim 1, **characterized in that** inside the cylinder (2) there are guides (8) fixed to the edges of the inlet openings (5) along the connecting line of the supplemental blades (6) to the surface of the cylinder (2), while said guides (8) are bent up, with the convex side directed toward outside, and, at the same time, are inclined toward the bottom of the cylinder (2), said bottom comprising outlet openings (9).
